# FASCICULE DE BREVET EUROPEEN

(11) **EP 3 180 213 B1**
(45) Date de publication et mention de la délivrance du brevet: **02.09.2020**
(21) Numéro de dépôt: 15756192.9
(22) Date de dépôt: 10.07.2015
(51) Int. Cl.: B60R 16/023

(54) **AGENCEMENT POUR VÉHICULE AUTOMOBILE MUNI D'UN SUPPORT DE BOÎTIER ÉLECTRONIQUE DISPOSÉ EN AVANT D'UN ÉLÉMENT DE PASSAGE DE ROUE AVANT**
VORRICHTUNG FÜR KRAFTFAHRZEUG MIT EINEM HALTER FÜR EINEN SCHALTKASTEN, HALTER VOR EINEM VORDEREN RADKASTEN ANGEBRACHT
ARRANGEMENT FOR A MOTOR VEHICLE PROVIDED WITH AN ELECTRONIC HOUSING SUPPORT AND DISPOSED IN FRONT OF A FRONT WHEEL ARCH ELEMENT

(30) Priorité: 14.08.2014 FR 1457831
(43) Date de publication de la demande: 21.06.2017
(73) Titulaire: RENAULT s.a.s., 92100 Boulogne-Billancourt (FR)
(72) Inventeur: LAMARE, Max, F-91470 Limours (FR); PAROLINI, Pascal, F-95720 Le Mesnil Aubry (FR); BOUFFIER, Ludivine, F-78180 Montigny le Bretonneux (FR); BLANC, Lionel, F-92320 Chatillon (FR)
(86) Numéro de dépôt international: PCT/FR2015/051910
(87) Numéro de publication internationale: WO 2016/024051

(56) Documents cités:
- EP-A1- 1 403 144
- EP-A1- 1 557 335
- WO-A2-00/70922
- DE-A1-102011 012 326
- FR-A1- 2 715 247
- JP-A- 2005 153 702
- US-A1- 2014 131 536

## Description

### Domaine technique de l'invention

L'invention concerne le domaine de l'automobile.

L'invention a pour objet un véhicule automobile comprenant un agencement, le véhicule automobile comportant un compartiment moteur et un élément de passage de roue avant gauche, délimitant une partie dudit compartiment moteur.

### État de la technique

Le développement de nouveaux véhicules avec des fonctions et/ou des performances supérieures implique souvent l'intégration de composants additionnels au sein du véhicule.

Généralement, l'emplacement de ces composants additionnels est choisi de sorte à limiter les coûts en termes de connectique.

Dans le cadre de l'intégration de ces composants additionnels au sein du compartiment moteur, on fait généralement face à des problèmes thermiques du fait de températures élevées à certains endroits dudit compartiment moteur.

### Objet de l'invention

Le but de la présente invention est de proposer une solution qui remédie aux inconvénients listés ci-dessus.

On tend vers ce but en ce que l'agencement comporte un support de boîtier électronique monté en avant de l'élément de passage de roue.

Le support de boîtier électronique comporte un premier point de montage selon un axe latéral du véhicule et un deuxième point de montage selon un axe longitudinal du véhicule.

L'agencement comporte un longeron configuré de sorte à s'étendre selon la longueur du véhicule automobile, ledit élément de passage de roue étant monté sur le longeron, et le premier point de montage est fixé au longeron et le deuxième point de montage est fixé à une pièce montée sur le longeron et s'étendant latéralement audit longeron.

Le support de boîtier électronique peut comporter une première partie munie d'une première surface sensiblement plane et une deuxième partie munie d'une deuxième surface sensiblement plane, lesdites première et deuxième surfaces étant incluses dans des plans sécants, notamment sensiblement perpendiculaires.

En outre, le support de boîtier électronique comporte un premier bras comportant le premier point de fixation et un deuxième bras comportant le deuxième point de fixation.

Avantageusement, le deuxième bras vient de matière commune avec la deuxième partie du support de boîtier électronique et/ou le premier bras est assemblé sur la première partie du support de boîtier électronique, notamment par soudure.

Selon un perfectionnement, le support de boîtier électronique comporte deux languettes chacune munie d'un trou autorisant le guidage dudit support de boîtier électronique par un moyen de montage coopérant avec lesdits trous au cours de l'assemblage du boîtier électronique dans le compartiment moteur.

Préférentiellement, un boîtier électronique est assemblé sur le support de boîtier électronique, notamment le boîtier électronique comporte en son sein un convertisseur DC/DC.

L'invention est aussi relative à un véhicule comportant un agencement selon l'une quelconque des revendications précédentes.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective de l'avant un véhicule automobile selon un mode d'exécution de l'invention,
- la figure 2 est une vue en perspective simplifiée par retrait d'éléments par rapport à la figure 1,
- la figure 3 représente la figure 2 selon une autre vue dans laquelle l'agencement est dépourvu de l'élément de passage de roue,
- la figure 4 illustre, pris isolément, le support de boîtier électronique utilisé dans le cadre de l'invention.

### Description de modes préférentiels de l'invention

L'agencement décrit ci-après diffère de l'art antérieur en ce qu'il est choisi un emplacement spécifique du compartiment moteur pour installer un support de boîtier électronique.

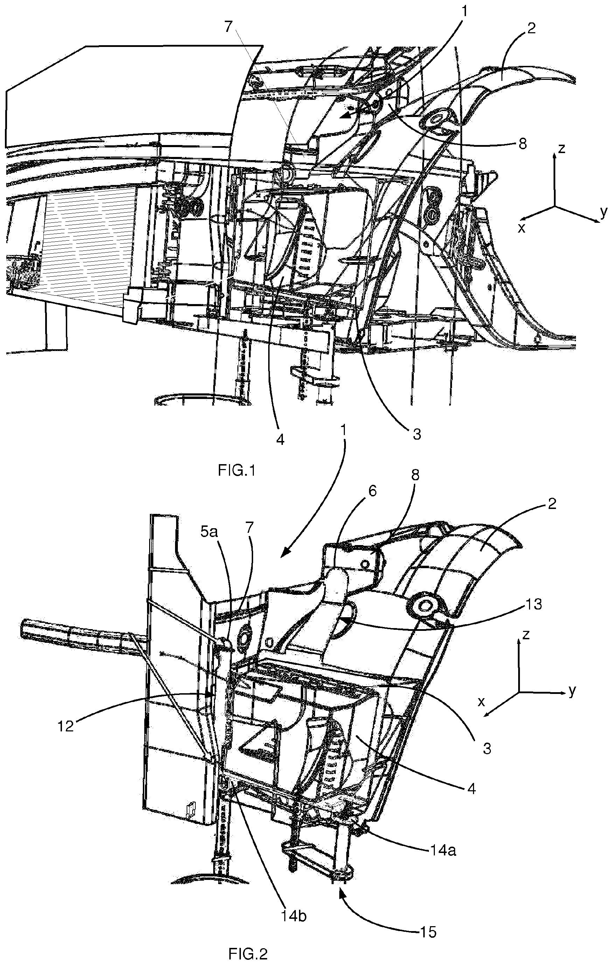

Sur les figures 1 à 4, il est représenté un repère orthonormé d'axes X, Y et Z. Lorsque le ou les éléments représentés aux figures sont montés au sein d'un véhicule automobile, l'axe X est sensiblement parallèle à l'axe longitudinal dudit véhicule automobile et orienté vers l'avant dudit véhicule automobile, l'axe Z est sensiblement parallèle à l'axe horizontal du véhicule automobile, l'axe Y est sensiblement parallèle à l'axe transversal du véhicule automobile.

Dans la présente description, par sensiblement on entend exactement ou selon une tolérance de plus ou moins 10%.

Comme illustré aux figures 1 et 2, l'agencement pour véhicule automobile comporte un compartiment moteur 1 et un élément de passage de roue 2, notamment de roue avant gauche.

Le passage de roue avant gauche est préféré dans le sens où l'avant du passage de roue avant droit sera comblé par d'autres éléments tels un canister, un filtre à gasoil ou entre un bocal lave vitre.

Un élément de passage de roue 2 au sens de la présente description est une enveloppe rigide disposée au dessus d'une roue associée (non représentée) lorsque l'agencement est monté au sein d'un véhicule automobile prêt à rouler. Il est généralement intercalé entre la roue et le compartiment moteur 1.

Cet élément de passage de roue 2 délimite une partie dudit compartiment moteur 1.

L'agencement comporte en outre le support 3 de boîtier électronique 4 monté en avant de l'élément de passage de roue 2.

Par « en avant de l'élément de passage de roue 2 », on entend que selon l'axe longitudinal du véhicule automobile orienté de l'arrière vers l'avant dudit véhicule on retrouve, selon ladite orientation, l'élément de passage de roue 2 puis le support 3 de boîtier électronique.

Cet emplacement particulier est avantageux dans le sens où il s'agit d'un emplacement du compartiment moteur où la température est généralement plus faible du fait d'un éloignement relatif du moteur. En outre, la position en avant permet aussi de profiter d'un refroidissement naturel dû aux flux d'air pénétrant dans le compartiment moteur du fait de l'avancement du véhicule automobile en marche avant. En ce sens, il est possible, lorsque le boîtier électronique 4 est monté sur ledit support 3 de boîtier électronique, d'éviter l'ajout d'un système de refroidissement dudit boîtier.

Préférentiellement, le boîtier électronique 4 est assemblé sur le support 3 de boîtier électronique, notamment le boîtier électronique 4 comporte en son sein un convertisseur DC/DC.

Un convertisseur DC/DC permet de prendre en entrée une première tension continue, et de modifier en sortie la valeur de cette tension soit en l'élevant soit en l'abaissant.

Typiquement, l'entrée et la sortie du convertisseur situé dans le boîtier 4 peuvent être reliées à un radiateur ou refroidisseur additionnel (non représenté) situé devant le radiateur principal destiné au refroidissement du moteur. Ces radiateurs sont typiquement assemblés au sein d'une face avant technique s'étendant transversalement à la direction longitudinale du véhicule, qui intègre la valise de refroidissement. Cette dernière comprend un ensemble d'éléments regroupés en couches juxtaposées et est composée classiquement du radiateur à eau de refroidissement moteur, du RAS optionnel (refroidissement de radiateur turbo) et du condenseur. Ces éléments sont disposés en aval d'un chemin d'écoulement d'air pénétrant dans une ouverture de grille d'aération dans le bouclier ou la face avant du véhicule, de façon à être refroidis par cet air frais.

Le convertisseur DC/DC a été donné à titre d'exemple, d'autres éléments peuvent être intégrés dans le passage de roue gauche du type : calculateur BV étanche.

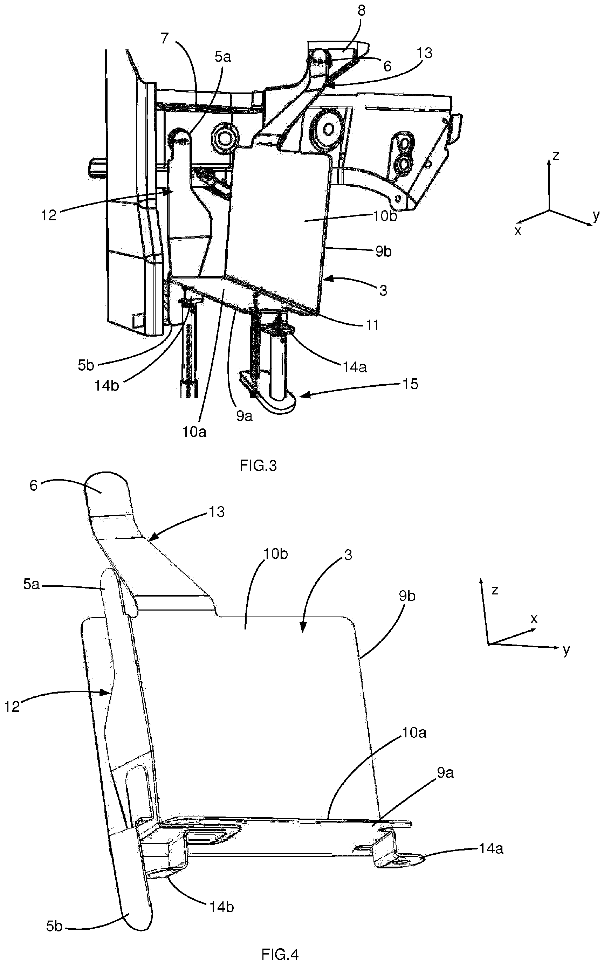

L'emplacement choisi pour monter le support 3 de boîtier électronique n'est pas un emplacement conformé pour faciliter un tel montage. En ce sens, comme visible aux figures 2 à 4, le support 3 de boîtier électronique comporte un premier point de montage 5a selon un axe latéral du véhicule et un deuxième point de montage 6 selon un axe longitudinal du véhicule. Par ailleurs, sur le support 3 de boîtier électronique peut aussi comporter un autre premier point de montage 5b (visible aux figures 3 et 4). Dans ce cas les deux premiers points de montage 5a, 5b sont décalés le long de l'axe Z.

Au niveau des premier(s) et deuxième points de montage 5a, 5b, 6, l'assemblage du support 3 de boîtier électronique au reste du véhicule peut se faire par soudure, par vissage, ou encore par tout autre moyen adapté.

Selon un perfectionnement, on tire parti d'organes environnants pour participer à la fixation du support 3 de boîtier électronique. En ce sens, comme illustré aux figures 1 à 3, selon ce perfectionnement l'agencement comporte un longeron 7 configuré de sorte à s'étendre selon la longueur du véhicule automobile. Ledit élément de passage de roue 2 (non visible à la figure 3) est alors monté sur le longeron 7, par exemple par soudure ou vissage. En outre, le premier point de montage 5a est fixé au longeron 7 et le deuxième point de montage 6 est fixé à une pièce 8 montée sur le longeron 7 et s'étendant latéralement audit longeron 7, notamment vers une direction à l'opposée d'une partie centrale du compartiment moteur située entre deux longerons 7. Cette pièce 8 peut être une partie de l'élément de passage de roue 2 comme l'illustre la figure 2. Un tel montage du support 3 de boîtier électronique dans le compartiment moteur permet un maintien idoine de ce dernier au cours de la vie du véhicule automobile.

Le longeron 7 est typiquement un longeron destiné au montage du moteur, notamment via un système de fixation à sillent bloc. Ainsi, dans le compartiment moteur, on retrouve généralement deux longerons 7 sensiblement parallèles encadrés par les passages de roues avant gauche et droite.

Selon une réalisation particulière (figure 3 et 4), le support 3 de boîtier électronique comporte une première partie 9a munie d'une première surface 10a sensiblement plane et une deuxième partie 9b munie d'une deuxième surface 10b sensiblement plane. De préférence, ces première et deuxième surfaces 10a, 10b sont incluses dans des plans sécants, notamment sensiblement perpendiculaires.

Ces première et deuxième surfaces 10a, 10b forment généralement des portées d'appui réceptionnant le boîtier électronique lorsque ce dernier est monté audit support 3 de boîtier électronique.

Comme illustré, les première et deuxième surfaces 10a, 10b comportent préférentiellement une interface commune 11 (figure 3). Dans cet exemple, la deuxième surface 10b s'étend préférentiellement selon un plan sensiblement vertical du véhicule (plan parallèle au plan défini par les axes ZY des figures 1 à 4) et la première surface 10a s'étend à partir de la première surface en direction de l'avant du véhicule automobile (en direction de l'orientation de l'axe X, notamment dans le plan parallèle au plan défini par les axes XY des figures 1 à 4).

Les première et deuxième parties 9a, 9b (et donc surfaces 10a, 10b) peuvent être formées en une seul pièce monolithique, par exemple une tôle pliée ou un plastique moulé.

Pour faciliter le montage, le support 3 de boîtier électronique peut comporter un premier bras 12 comportant le(s) premier(s) point(s) de fixation 5a, 5b et un deuxième bras 13 comportant le deuxième point de fixation 6 (figures 2 à 4).

Le deuxième bras 13 peut être courbé de telle sorte à se rapprocher de l'élément de passage de roue 2 de telle sorte à optimiser l'espace disponible au sein du compartiment moteur. Le deuxième bras 13 permet en outre le maintien et la tenue du support boitier DCDC.

Comme visible aux figures 2 à 4, le deuxième bras 13 peut venir de matière commune avec la deuxième partie 9b du support 3 de boîtier électronique et/ou le premier bras 12 peut être assemblé sur la première partie 9b du support 3 de boîtier électronique, notamment par soudure.

Toujours pour faciliter l'assemblage du support 3 de boîtier électronique, ce dernier peut comporter deux languettes 14a, 14b chacune munie d'un trou autorisant le guidage dudit support 3 de boîtier électronique par un moyen de montage 15 (visible aux figures 2 et 3) coopérant avec lesdits trous au cours de l'assemblage du support 3 de boîtier électronique dans le compartiment moteur. Ceci permet de maintenir l'assiette du support 3 de boîtier électronique lors de sa fixation au reste de l'agencement, notamment via les premiers (s) et deuxièmes points de fixation.

Selon l'exemple particulier illustré aux figures 2 à 4, les languettes peuvent s'étendre dans une direction opposée à la première surface 10a. Notamment, l'une des languettes 14a peut venir de matière commune avec la première partie 9a du support 3 de boîtier électronique et l'autre languette 14b peut être fixée, par exemple par soudure, au premier bras 12 portant le premier point de fixation 5a.

Ainsi, un arrangement selon la présente invention permet un gain de place au sein du compartiment moteur en utilisant astucieusement un emplacement non prévu à l'origine pour recevoir un boîtier électronique.

L'invention est bien entendu aussi relative à un véhicule automobile comportant un agencement tel que décrit.

## Revendications

1. Véhicule automobile, comprenant un compartiment moteur (1) dans lequel est situé un longeron (7) s'étendant selon la longueur du véhicule et destiné au montage du moteur, le véhicule comprenant en outre un élément de passage de roue (2) avant gauche monté sur le longeron (7), délimitant une partie dudit compartiment moteur (1), **caractérisé en ce qu'**il comporte un support (3) de boîtier électronique monté à un emplacement du compartiment moteur en avant de l'élément de passage de roue (2), le support (3) de boîtier électronique comportant deux premiers points de montage (5a, 5b) selon un axe latéral du véhicule, ces deux premiers points de montage étant décalés le long d'un axe Z sensiblement vertical du véhicule, et un deuxième point de montage (6) selon un axe longitudinal du véhicule, les premiers points de montage (5a, 5b) étant fixés au longeron (7) et le deuxième point de montage (6) étant une pièce (8) montée sur le longeron (7) et s'étendant latéralement au longeron (7), le support (3) de boîtier électronique comportant un premier bras (12) comportant le premier point de fixation (5a, 5b) et un deuxième bras (13) comportant le deuxième point de fixation (6).

2. Véhicule selon la revendication 1 , **caractérisé en ce que** le support (3) de boîtier électronique comporte une première partie (9a) munie d'une première surface (10a) sensiblement plane et une deuxième partie (9b) munie d'une deuxième surface (10b) sensiblement plane, lesdites première et deuxième surfaces (10a, 10b) étant incluses dans des plans sécants sensiblement perpendiculaires.

3. Véhicule selon la revendication 2, **caractérisé en ce que** le deuxième bras (13) vient de matière commune avec la deuxième partie (9b) du support (3) de boîtier électronique et/ou **en ce que** le premier bras (12) est assemblé sur la première partie (9a) du support (3) de boîtier électronique par soudure.

4. Véhicule selon l'une quelconque des revendications précédentes, **caractérisé en ce que** le support (3) de boîtier électronique comporte deux languettes (14a, 14b) chacune munie d'un trou autorisant le guidage dudit support (3) de boîtier électronique par un moyen de montage (15) coopérant avec lesdits trous au cours de l'assemblage du boîtier électronique (4) dans le compartiment moteur.

5. Véhicule selon l'une quelconque des revendications précédentes, **caractérisé en ce qu'**un boîtier électronique (4) est assemblé sur le support (3) de boîtier électronique, le boîtier électronique (4) comportant en son sein un convertisseur DC/DC.

## Patentansprüche

1. Kraftfahrzeug, das einen Motorraum (1) enthält, in dem sich ein Längsträger (7) befindet, der sich gemäß der Länge des Fahrzeugs erstreckt und für die Montage des Motors bestimmt ist, wobei das Fahrzeug außerdem ein auf den Längsträger (7) montiertes linkes vorderes Radkastenelement (2) enthält, das einen Teil des Motorraums (1) begrenzt, **dadurch gekennzeichnet, dass** es einen Elektronikgehäuseträger (3) aufweist, der an einer Stelle des Motorraums vor dem Radkastenelement (2) montiert ist, wobei der Elektronikgehäuseträger (3) zwei erste Montagepunkte (5a, 5b) gemäß einer seitlichen Achse des Fahrzeugs, wobei diese zwei ersten Montagepunkte entlang einer im Wesentlichen senkrechten Achse Z des Fahrzeugs versetzt sind, und einen zweiten Montagepunkt (6) gemäß einer Längsachse des Fahrzeug aufweist, wobei die ersten Montagepunkte (5a, 5b) am Längsträger (7) befestigt sind und der zweite Montagepunkt (6) ein Bauteil (8) ist, das auf den Längsträger (7) montiert ist und sich seitlich zum Längsträger (7) erstreckt, wobei der Elektronikgehäuseträger (3) einen ersten Arm (12), der den ersten Befestigungspunkt (5a, 5b) aufweist, und einen zweiten Arm (13) aufweist, der den zweiten Befestigungspunkt (6) aufweist.

2. Fahrzeug nach Anspruch 1, **dadurch gekennzeichnet, dass** der Elektronikgehäuseträger (3) einen ersten Teil (9a), der mit einer im Wesentlichen ebenen ersten Fläche (10a) versehen ist, und einen zweiten Teil (9b) aufweist, der mit einer zweiten im Wesentlichen ebenen Fläche (10b) versehen ist, wobei die erste und die zweite Fläche (10a, 10b) in im Wesentlichen lotrechten Schnittebenen eingeschlossen sind.

3. Fahrzeug nach Anspruch 2, **dadurch gekennzeichnet, dass** der zweite Arm (13) aus dem gleichen Material wie der zweite Teil (9b) des Elektronikgehäuseträgers (3) besteht und/oder dass der erste Arm (12) durch Schweißen auf den ersten Teil (9a) des Elektronikgehäuseträgers (3) montiert wird.

4. Fahrzeug nach einem der vorhergehenden Ansprüche, **dadurch gekennzeichnet, dass** der Elektronikgehäuseträger (3) zwei Zungen (14a, 14b) aufweist, die je mit einem Loch versehen sind, das die Führung des Elektronikgehäuseträgers (3) durch eine Montageeinrichtung (15) erlaubt, die während des Einbaus des Elektronikgehäuses (4) in den Motorraum mit den Löchern zusammenwirkt.

5. Fahrzeug nach einem der vorhergehenden Ansprüche, **dadurch gekennzeichnet, dass** ein Elektronikgehäuse (4) auf den Elektronikgehäuseträger (3) montiert wird, wobei das Elektronikgehäuse (4) in seinem Inneren einen DC/DC-Wandler aufweist.

## Claims

1. Motor vehicle comprising an engine compartment (1) in which there is located a side beam (7) extending along the length of the vehicle and intended for mounting the engine, the vehicle also comprising a left front wheel arch element (2) mounted on the side beam (7), delimiting a part of said engine compartment (1), **characterized in that** it comprises an electronic unit support (3) mounted at a location in the engine compartment forward of the wheel arch element (2), the electronic unit support (3) comprising two first mounting points (5a, 5b) along a lateral axis of the vehicle, these two first mounting points being offset along a substantially vertical axis Z of the vehicle, and a second mounting point (6) along a longitudinal axis of the vehicle, the first mounting points (5a, 5b) being fixed to the side beam (7), and the second mounting point (6) being a component (8) mounted on the side beam (7) and extending laterally with respect to said side beam (7), the electronic unit support (3) comprising a first arm (12) comprising the first fixing point (5a, 5b) and a second arm (13) comprising the second fixing point (6).

2. Vehicle according to Claim 1, **characterized in that** the electronic unit support (3) comprises a first part (9a) provided with a substantially planar first surface (10a) and a second part (9b) provided with a substantially planar second surface (10b), said first and second surfaces (10a, 10b) being comprised within substantially perpendicular secant planes.

3. Vehicle according to Claim 2, **characterized in that** the second arm (13) is formed of one material with the second part (9b) of the electronic unit support (3), and/or **in that** the first arm (12) is assembled on the first part (9a) of the electronic unit support (3) by welding.

4. Vehicle according to any one of the preceding claims, **characterized in that** the electronic unit support (3) comprises two tabs (14a, 14b) each provided with a hole that allows said electronic unit support (3) to be guided by a mounting means (15) collaborating with said holes while the electronic unit (4) is being assembled in the engine compartment.

5. Vehicle according to any one of the preceding claims, **characterized in that** an electronic unit (4) is assembled on the electronic unit support (3), the electronic unit (4) comprising a DC/DC converter within it.
